(19) Europäisches Patentamt

European Patent Office

Office européen des brevets

(11) **EP 4 734 579 A1**

(12) **EUROPEAN PATENT APPLICATION**

(43) Date of publication:
29.04.2026 Bulletin 2026/18

(21) Application number: 25203669.4

(22) Date of filing: 22.09.2025

(51) International Patent Classification (IPC):
*H04W 12/63* (2021.01)  *H04W 12/06* (2021.01)
*H04W 4/02* (2018.01)  *H04W 12/33* (2021.01)

(52) Cooperative Patent Classification (CPC):
H04W 12/06; H04W 4/023; H04W 12/33;
H04W 12/63

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.10.2024 US 202418926396

(71) Applicant: **Intel Corporation**
**Santa Clara, CA 95052 (US)**

(72) Inventor: **VAUGHN, Robert**
**Portland, 97229 (US)**

(74) Representative: **2SPL Patentanwälte PartG mbB**
**Landaubogen 3**
**81373 München (DE)**

(54) **METHOD, APPARATUS, AND NON-TRANSITORY MACHINE-READABLE STORAGE MEDIUM FOR CONTINUOUS PROXIMITY-BASED AUTHENTIFICATION**

(57) Provided is a computer-readable medium including computer-readable instructions. When the instructions are executed by a computer, the computer may implement a method. According to this method, a first group of distance-related information associated with a first proximity detection device and a user over a period of time is obtained. Furthermore, based on the first group of distance-related information, first proximity information indicating whether the first proximity detection device is proximate to the user is determined. Moreover, the first proximity information is used for authentication.

Fig. 1

EP 4 734 579 A1

## Description

## Background

In today's digital landscape, user authentication is used to promote secure access to online systems, applications, and devices. Some methods such as passwords, one-time passwords (OTPs), and multi-factor authentication (MFA) are commonly used but are prone to some vulnerabilities.

## Brief description of the Figures

Some examples of apparatuses and/or methods will be described in the following by way of example only, and with reference to the accompanying figures, in which

Fig. 1 shows a schematic figure of an example of a system 100 for proximity-based authentication;

Fig. 2 shows a flow chart of an example of a method 200 for proximity-based authentication;

Fig. 3 shows a flow chart of an example of a method 300 for proximity-based authentication;

Fig. 4 shows a flow chart of an example of proximity-based authentication;

Fig. 5 shows a block diagram of an example of apparatus 500;

Fig. 6 shows a block diagram of an example of apparatus 600; and

Fig. 7 shows a block diagram of an example of apparatus 700.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures identical or similar reference numerals refer to identical or similar elements and/or features, which may be identical or implemented in a modified form while providing the identical or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the identical combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the identical function. If a function is described below as implemented using multiple elements, further examples may implement the identical function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage medium accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the identical or different examples. Furthermore, the terms "comprising," "including," "having," and the like, as used with respect to examples of the present disclosure, are synonymous.

In some examples, authentication systems may rely on methods such as usernames, passwords, passphrases, one-time passwords (OTPs), and multi-factor authentication (MFA) techniques to verify the identity of users. While these methods may provide a basic level of security, they may be vulnerable to various cyberattacks, including phishing, interception, and brute force attacks. These methods may typically assume that if the correct credentials are provided, the user requesting access is authorized, but sometimes they do not account for the physical proximity of the user to the authentication device.

In some examples, multi-factor authentication systems may attempt to add layers of security by using OTPs sent via short message service (SMS), email, biometrics, or hardware tokens, yet they may remain susceptible to security breaches. For example, SMS-based OTPs may be intercepted in some examples, and even biometrics can be comprised in certain situations. More importantly, these examples do not provide a continuous verification of the user's presence near the authentication device, creating security gaps that can be exploited.

In some examples, device-based authentication methods may assume that the user may always remain in possession of the device. These methods typically do not verify that the user is continuously in proximity to the device, leading to potential security risks if the device is stolen or used by an unauthorized individual without the knowledge of the authentication system.

In some examples, some methods for authentication may include Username and Password Combinations, One-Time Passwords (OTPs), Multi-Factor Authentication (MFA), Behavioral Biometrics, Device-Based Authentication, and Environmental Factors. In some examples, Username and Password Combinations may be vulnerable to cyberattacks such as phishing, keylogging, and brute-force attacks. In some examples, OTPs may be intercepted or phished, particularly when transmitted via SMS or email. In some examples, MFA solutions, such as two-factor authentication via SMS, email, or specialized hardware tokens, may offer some improvements over single-factor methods. However, they do not continuously verify the user's presence near the device. Furthermore, these systems may still be vulnerable to social engineering attacks and interception. In some examples, authentication methods based on behavioral biometrics, such as typing speed or navigation patterns, are relatively new and innovative, but they may raise concerns about privacy and potential misuse of personal behavioral data. In some examples, some device-based authentication systems rely on physical devices such as smart cards, RFID chips, or smartphones as part of the authentication process. While these devices may serve as a form of secondary authentication, they may assume the user's possession of the device but do not actively monitor whether the user is continuously near the device throughout the session. In some examples, some security systems incorporating environmental factors, such as location data, may typically verify the user's location only once during the authentication process and do not provide continuous proximity verification.

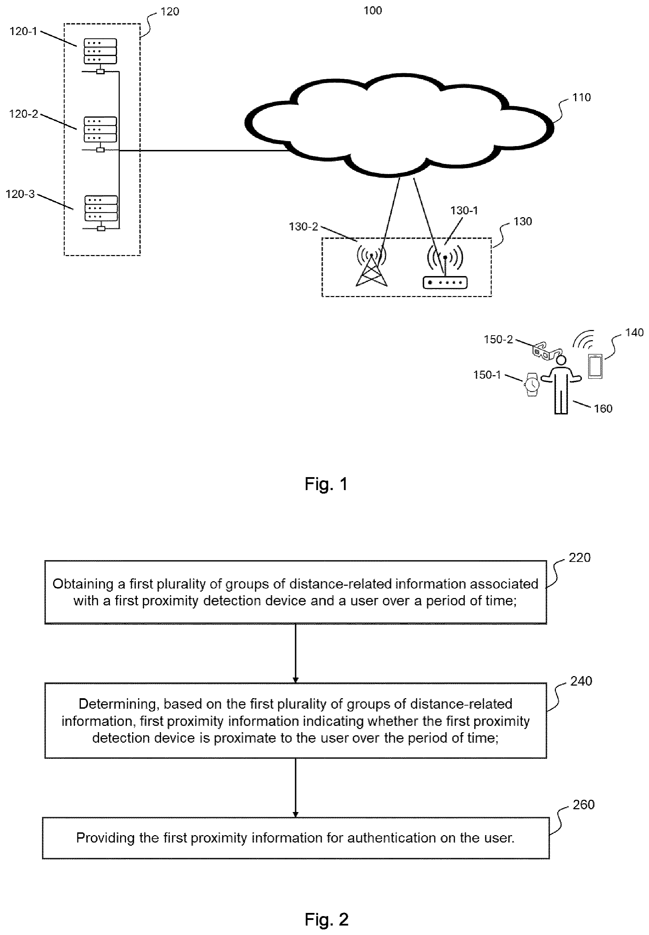

Fig. 1 shows a schematic figure of an example of a system 100 for continuous proximity-based authentication.

The system 100 in the example may comprise a network 110 coupled with a plurality of authentication devices 120, such as devices120 1-3, and a plurality of access points 130, such as a Wi-Fi access point 130-1 and a base station 130-2. In some examples, of authentication devices may be physical authentication servers. In some examples, a processing device 140, such as a laptop or a smartphone, may be coupled with at least one of the access points 130 as well as one or more proximity detection devices 150, such as a smart watch 150-1 and a pair of smart glasses 150-2. In some examples, the one or more proximity detection devices 150 may be used by a user 160. In some examples, the processing device 140 is coupled with the access point 130 via wireless connections, such as connections based on Wi-Fi standards or based on 3GPP (3rd Generation Partnership Project) wireless standards. In some examples, the authentication devices 120 may be respectively responsible for authentication of different services. In some other examples, one authentication device 120 may be responsible for authentication of different services. In some examples, the proximity detection device 150 may be a smartphone and the processing device 160 may be another smartphone, or a device having enough capability of processing data, such as a laptop. In some examples, the processing device 160 may be personal computer or a server, which may be coupled with network 110 via wired network, such as Ethernet, Fiber Optic Networks, DSL (Digital Subscriber Line), Coaxial Cable Networks, and Powerline Networking.

In some examples, each of the authentication devices, proximity detection devices and processing device comprises at least one processor, and one memory storing machine-readable instructions.

Fig. 2 shows a flow chart of an example of a method 200 for continuous proximity-based authentication.

In some examples, method 200 may comprise operations 220, 240 and 260. Operation 220 may comprise obtaining a first group of distance-related information of a first proximity detection device, such as device 150 in Figure 1, and a user over a period of time. In some examples, each type of information in the first group is associated with a distance between the user and the first proximity detection device. Operation 240 may comprise determining, based on the first group of distance-related information, first proximity information indicating whether the first proximity detection device, such as device 150, is proximate to the user, such as user 160, over the period of time. Operation 260 may comprise providing the first proximity information for authentication on the user. In some examples, in order to make authentication on the user, the first proximity information may be provided to a processing device, such as device 140, so that the first proximity information or some information generated by the processing device based on the first proximity information may be provided to an authentication device, such as device 120. In some other examples, the first proximity information may be provided to the authentication device without via the processing device 140. In some examples, as the authentication is based on distance-related information over a period of time, such as a few seconds, a few minutes or a few hours, rather than based on information on one time point or time slot, the authentication may be more accurate.

In some examples, operation 240 may comprise determining a first proximal record and then determining the first proximity information based on the first proximal record. In some examples, the first proximal record may be determined based on the first group of distance-related information and a function, and the first proximity information may be determined based on the first proximal record and a first threshold value.

In some examples, the first group of information may comprise at least one of: sound level information of the user detected by the first proximity detection device, biometric information of the user, information on geographical coordinates of the first proximity detection device, temperature information detected by the first proximity detection device, air pressure information detected by the first proximity detection device, or motion information detected by first proximity detection device. In one example, the first group of information may only comprise one type of information, such as biometric information or information on geographic coordinates. In another example, the first group of information may include some or all of the above information.

In some examples, the first group of information may be used as the input of a function and the first proximal record may be the output of the function. The output of the function may refer to a statistical result representing the distance or proximity between the first proximity detection device and the user.

In some examples, the first proximity information is determined by comparing the first proximal record with the first threshold value. Based on the comparison, the first proximity information may indicate that first proximity detection device is proximate to the user or is not proximate to the user over the period of time.

In some examples, the function is applied with a plurality of weights to different input values. For example, in the function F(t) as follows, $w_1$-$w_6$ are the weights applied to different input values, where input values may comprise S(t), B(t), G(t), etc.

$$F(t) = w_1\,S(t) + w_2\,norm(B(t)) + w_3\,dist(G(t), G_{prev}) + w_4\,T(t) + w_5\,P(t) + w_6\,var(M(t))$$

The application of the weights may modify the relationship among a plurality of inputs according to the respective importance and/or effects of the inputs, so that a better result of F(t) may be achieved.

In some examples, the user may request a plurality of services, including a first service and a second service, etc.

In some examples, when the user requests the first service, the first proximity information may be determined for the first service, which may mean that the first proximity information may be used for the authentication on an access request for the first service by the user.

In some examples, the first proximity detection device may provide a first identifier for the first service requested for the authentication, where the first identifier corresponds to the first proximity information, and where the first identifier comprises user information identifying the user and first service information identifying the first service. In some examples, the first identifier may be generated by the first proximity detection device. In some other examples, the first identifier may be generated by the processing device and sent to the first proximity detection device.

In some examples, the user may further request the second service. In such a scenario, the first proximity detection device may determine second proximity information for the second service requested by the user. The method of determining the second proximity information may be the same or similar to the method of determining the first proximity information. In some examples, the first proximity detection device may generate a second identifier for the second service, where the second identifier comprises the user information and second service information identifying the second service. Although both the first identifier and the second identifier have the same user information, they have different service information. In some examples, the second identifier may be generated by the processing device.

In some examples, in order to perform authentication on the second service, the first detection device may provide both the second proximity information and the second identifier for authentication. For example, the second proximity information and the second identifier may be included in one message or packet. Similarly, in order to perform authentication on the first service, the first detection device may provide both the first proximity information and the first identifier for authentication.

In some examples, in order to protect the privacy of users, the determined proximity information, such as the first and second proximity information, is without privacy information of the user. In some examples, the privacy information of the user may comprise location data of the user, biometrics data of the user, video data of the user and/or voice data of the user.

In some examples, information associated with decoupling of the user from the first proximity detection device over the period of time may be determined and then to be used to determine the first proximity information. For example, the first proximity information may be determined based on both the first group of distance-related information and the information associated with decoupling of the user from the first proximity detection device. In some examples, information associated with decoupling of the user from the first proximity detection device over the period of time may comprise a number of times decoupling occurs, length of time of being decoupled over the period of time, a number of times coupling occurs, and/or length of time of being coupled over the period of time. The decoupling of the user from the first proximity detection device may mean the user gets decoupled from the first proximity detection device or the first proximity detection device gets decoupled from the user. In some examples, getting decoupled may mean that the distance between the proximity detection device and the user is greater than a threshold value, the existence of the user may not be detected by the first proximity detection device anymore, and/or the communication between the proximity detection device and the user is lost.

In some examples, communication between proximity detection devices and the user, the communication between different proximity detection devices coupled with the user, the communication between the proximity detection devices and the processing device, and/or the communication between the processing device and the user may be based on proximity-based methods.

In some examples, the proximity-based methods may include sound/acoustic transmission, which may utilize sound waves, often at frequencies inaudible to humans, for data transfer. In some examples, Bluetooth may be another such method, employing short-wavelength Ultra High Frequency (UHF) radio waves to enable data exchange over short distances, and may be commonly used for connecting peripherals or sharing files between nearby devices. In some examples, visual communication methods including Infrared (IR), which may use light waves invisible to the human eye for short-range signaling in devices like remote controls, may be some additional examples of the proximity-based methods. Among visual communication methods, Visible Light Communication (VLC), which uses light-emitting diodes (LEDs) to transmit data through light modulation at speeds imperceptible to humans, may be a typical one. VLC may support high-speed data transmission technologies such as Light Fidelity (Li-Fi). In some examples, Laser communication, which may require a clear line of sight and/or allow for high-speed transfers, may also enable point-to-point data transmission over short distances and therefore may be one of the proximity-based methods.

These proximity-based communication methods may highlight the physical closeness of the devices, further reinforcing their proximity to the user. Additionally, one or more of the authenticating devices could communicate with other devices that are capable of using conventional methods (e.g., Wi-Fi) to connect to authentication services.

In some examples, authentication history associated with first proximity detection device may be used for authentication. For example, the first proximity detection device may send the authentication history associated with first proximity detection device to the processing device and then processing device may send the authentication history to the authentication device. The authentication device may use both proximity information and the authentication history for authentication.

In some examples, the authentication history associated with first proximity detection device may be authentication history indicating failure and/or success of authentication on requests sent via the first proximity detection device for the user.

In some examples, the authentication history associated with the first proximity information may be of one or more services requested by the user. For example, the authentication history may include authentication history of a first service, authentication history of a second service, and authentication history of a third service, where each service is requested by the user.

In some examples, the authentication history of a service, such as the first service, requested by the user via the first proximity detection device may be provided to the authentication device for the authentication on a different service, such as the second service, requested by the user via the first proximity detection device.

In some examples, the first proximity detection device may store at least one of the first group of distance-related information or the first proximity information in a Write-Once Read-Many (WORM) memory for a predetermined period of time. For example, the first proximity detection device may store both the first group of distance-related information and the first proximity information in the WORM memory. In another example, the first proximity detection device may store the first group of distance-related information or the first proximity information in the WORM memory. The usage of WORM memory may make the stored data to be much more difficult to be altered or erased.

In some examples, in order to mitigate predictive forward attacks, such as precomputed rainbow attack, the first proximity detection device may perform hash to the at least one of the first group of distance-related information or the first proximity information and store a result of the hash.

In some examples, as the data stored in WORM memory may not be removed or deleted, the WORM memory in the proximity detection device may be replaced when the WORM memory is full or close to full. A threshold value may be configured for the trigging condition for replacing the WORM memory.

In some examples, responsive to the situation where a pre-determined portion of the WORM memory is used up for storage, the first proximity detection device may start a process of indicating replacement of the WORM memory. In a specific example, the process of replacing the WORM memory may comprise at least two options. The first of the two options may be indicating that the WORM memory is to be replaced by a new WORM memory. The second of the two options may be indicating that the first proximity detection device is to be replaced by another proximity detection device.

In some examples, a system may be described where multiple devices, such as proximity detection devices, may maintain, individually or collectively, continuous proximity to the user. These devices may store proximity information locally or, alternatively, communicate through an intermediary device to store the data in cloud services. When an authentication request is made to an online service, such as for online banking, e-commerce, or medical websites, the service may request and receive data from the proximity detection devices verifying whether the user has been in proximity to them. This process may maintain user privacy by not sharing sensitive details like location, biometrics, or other personal information.

To ensure the online service trusts the authenticity of the proximity data, the proximity detection devices may use WORM or similar methods for secure local storage. Furthermore, the attestations may be hashed and linked to create an immutable record, making it practically impossible to alter past entries. This may hold true whether the data is stored locally or in the cloud.

In some examples, the authentication service may need to verify that one or more proximity detection devices have been near the user, thereby confirming that the intended user is the one accessing the service. In some examples, the user's specific location, movements, or actions may be irrelevant or not important to this verification process, while the fact on whether the user has been near the devices is useful.

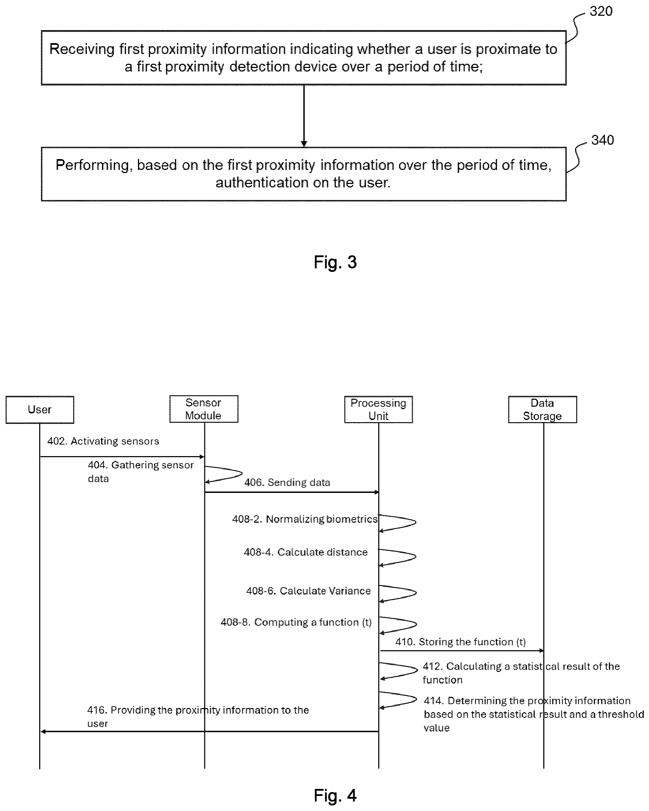

Fig. 3 shows a flow chart of an example of a method 300 for continuous proximity-based authentication. In some examples, the method 300 may comprise operations 320 and 340. Operation 320 may comprise receiving first proximity information indicating whether a user is proximate to a first proximity detection device over a period of time. Operation 340 may comprise performing, based on the first proximity information over the period of time, authentication on the user. In some examples, the method 300 may be performed by an authentication device, which may be a server, or a system including a plurality of authentication entities or servers. In some examples, the authentication device may be device 120. In some examples, as the authentication is performed based on the first proximity information over the period of time, not of a single time slot, the authentication may be more accurate than some other technical schemes.

In some examples, method 300 may further comprise receiving information associated with decoupling of the user from the first proximity detection devices over the period of time. In some examples, with information associated with decoupling, the performing the authentication on the user may comprise performing, based on the first proximity information and the information associated with decoupling, the authentication on the user. With usage of the information associated with decoupling, authentication may be further accurate.

In some examples, the information associated with decoupling comprises: a number of times decoupling occurs, length of time of being decoupled over the period of time, a number of times coupling occurs, and/or length of time of being coupled over the period of time.

In some examples, the authentication device may receive authentication history associated with the first proximity detection device. In some examples, the authentication on the user may be performed further based on the authentication history. In some examples, the meaning of the authentication history associated with the first proximity detection device may be the same or similar to the authentication history described in the examples associated with method 200.

In some examples, the information associated with decoupling comprises: a number of times decoupling occurs, length of time of being decoupled over the period of time, a number of times coupling occurs, and/or length of time of being coupled over the period of time.

In some examples, the information associated with decoupling comprises: a number of times decoupling occurs, length of time of being decoupled over the period of time, a number of times coupling occurs, and/or length of time of being coupled over the period of time.

In some examples, the method 300 may further use authentication history for authentication on requests for a service. Therefore, the method 300 may comprise receiving authentication history associated with the first proximity detection device, so that performing authentication on the user may be further based on authentication history.

In some examples, the authentication history is of one or more services requested by the user.

In some examples, the authentication history is the same to the authentication history presented in the examples associated with the method 200. For example, authentication history associated with the first proximity detection device may be the authentication history of a first service requested by the user. Furthermore, user authentication for a second service or the first service requested by the user may be performed based on the authentication history of the first service.

In some examples, authentication history of a service requested by the user may be used to perform authentication on request for another service requested by the user. For example, method 300 may further comprise receiving the authentication history of a first service requested by the user; and performing, based on the authentication history of the first service, user authentication on a second service requested by the user.

In some examples, the authentication history may comprise at least one of: a number of rejected authentication requests, a number of successful authentication requests, or a rejection rate of authentication requests.

In some examples, a proximity detection device may be a wearable smart ring, a smart bracelet, a smart badge, a smart necklace or a smart watch. In some examples, a wearable smart ring and a smart bracelet may be compact and unobtrusive and may be seamlessly integrated into daily activities of users. Biometric sensors may be further equipped with for added security layers. In some examples, a smart badge and a smart necklace may be worn with a lanyard and may be integrated with Near Field Communication (NFC) and/or Interactive Fiction Identifier (IFID) technologies for access control. In some examples, a smart watch may be configured with specialized authentication software while maintaining standard features of smart watch.

In some examples, the charging or power options for the above smart devices may include wireless induction charging and kinetic charging. The wireless induction charging may allow for easy charging via a docking station or pad, suitable for overnight charging or quick power boosts at a desk. The kinetic charging may harness movement to generate power, reducing dependency on traditional charging methods and enhancing device autonomy. Because the charging of proximity detection devices causes the devices to be far from their users, information associated with charging of the proximity detection devices, such as the charging mode, and/or the time of the charging of the devices, may be considered for determining proximity information or determining whether the user is still proximate to the proximity detection devices.

In some examples, parameters used for determining the proximity information may include sound of the user, biometrics of the user, GPS of the user, temperature of the user, air pressure of the environment where the user is, and/or accelerometer-derived motion of the user. In some examples, the biometrics may include pulse, oxygenation, sky texture, etc.

Fig. 4 shows a flow chart of an example of method 400 for determining proximity information.

At operation 402, one or more sensor modules in a proximity detection device, such as device 150, may be activated by a user, such as user 160.

At operation 404, the one or more sensor modules may gather or collect sensor data. In some examples, the sensor data may include at least one of the parameters of different types, such as $S(t)$, $B(t)$, $G(t)$, $T(t)$, $P(T)$ and $M(t)$. In some examples, $S(t)$ may represent the sound level at time $t$, $B(t)$ may represent a set of biometric readings, like pulse or oxygenation, at time $t$, $G(t)$ may represent the GPS coordinates at time $t$, $T(t)$ may represent the temperature at time $t$, $P(t)$ may represent the air pressure at time $t$, $M(t)$ may represent motion data from the accelerometer at time $t$. In some examples, each of the parameters is of the user, the proximity detection device, and/or the environment accommodating the user. In some examples, the first group of distance-related information may be one type of the above parameters. In some examples, the first group distance-related information may comprise some or all types of the above parameters.

At operation 406, the gathered sensor data is sent to a processing unit of the proximity detection device, such as device 150-1 or 150-2. In some examples, the processing unit may be one or more processors coupled with a memory.

At operation 408, the processing unit may pre-process the parameters. In some examples, at operation 408-02, the processing unit may normalize Biometrics ($norm(B(t))$).

In some examples, at operation 408-04, the processing unit may calculate distance $dist(G(t), G_{prev})$.

In some examples, at operation 408-06, the processing unit may calculate variance $Var(M(t))$. For example, $norm(B(t))$ may normalize the biometric readings, $dist(G(t), G_{prev})$ may calculate the distance between the current and previous GPS coordinates. $Var(M(t))$ may calculate the variance in motion data, indicating movement. In some examples, at operation

In some examples, at operation 408-8, the processing unit may compute function $F(t)$ based on the pre-processed parameters. In some examples, the function $F(t)$, which may be an aggregation function, is as follows:

$$F(t) = w_1\, S(t) + w_2\, norm(B(t)) + w_3\, dist(G(t), G_{prev}) + w_4\, T(t) + w_5\, P(t) + w_6\, var(M(t))$$

As shown above, different inputs, such as $S(t)$, $norm(B(t)$ and $dist(G(t), G_{prev})$, of function $F(t)$ are applied with different weights. For example, $w_1$, $w_2$, $w_3$, $w_4$, $w_5$, and $w_6$ may be weights assigned to different inputs for determining proximity. The application the values of the different weights may be based on the reliability and importance of different inputs.

In some examples, $F(t)$ may represent combined sensor readings at time $t$, such as the sensor data. Furthermore, $F(t)$ may include a weighted sum or another statistical combination of the readings. In some examples, the plurality of groups of distance-related information may include the above sensor data because the sensor data may be used to determine information associated with distance.

At operation 410, the processing unit may store the function (t) to a memory of the first proximity detection device.

At operation 412, the processing unit may determine a statistical result based on the computed F(t).

In some examples, in order to determine the proximity information, an analysis time window may be defined. For example, a time window may be $\Delta t=30$ minutes, which may be an example of the period of time. Furthermore, a statistical result, which may be an average or suitable statistical measure of F(t) over the time window ending at the current time, may be calculated. A formula to calculate the statistical result, such as the average or the suitable statistical measure of F(t), may be $R(t)=1/N \sum_{i=t-\Delta t}^{t} F(i)$. In some examples, R(t) is the statistical result.

At operation 414, the processing unit may determine the proximity information based on the statistical result and a threshold value.

In some examples, the processing unit may determine a threshold value $\theta$ representing the minimum required value of statistical result, such as R(t), to the proximity information. In some examples, if the value of the statistical result is equal or higher the threshold value, the proximity information is determined as "Valid," which means proximity detection device is proximate to the user. In some examples, if the value of the candidate proximity information is lower than the threshold value, the proximity information is determined as "Invalid," which means proximity detection device is not proximate to the user. For example, the proximity information, which may be called proximal record, at time t may be {"Valid" if $R(t) \geq \theta$, "Invalid" if $R(t) < \theta$}.

At operation 416, the processing unit may provide the proximity information to the user. For example, to provide the proximity information to the user, the processing unit may show the proximity information on a screen of the proximity detection device or play an audio message via a speaker proximity detection device.

In some examples, the sequence of all the operations in Fig. 4 may not be limited by the number of the operations and the sequence of the occurrence of the operations in the examples. The sequence may be determined by the nature of the technology. For examples, the sequence of operations 408-2, 408-4 and 408-6 may be modified or exchanged.

Fig. 4 does not limit the sequence of the operations and some of the operations may be omitted in some examples.

In some examples, code for implementing operations in Fig. 4 may be as follows.

```
<code>
SequenceDiagram
        participant User
        participant SensorModule as Sensor Module
        participant ProcessingUnit as Processing Unit
        participant DataStorage as Data Storage
        User->>SensorModule: Activate Sensors
        SensorModule->>SensorModule: Gather Sensor Data (S(t), B(t), G(t), T(t), P(t), M(t))
        SensorModule->>ProcessingUnit: Send Data
        ProcessingUnit->>ProcessingUnit: Normalize Biometrics (norm(B(t)))
        ProcessingUnit->>ProcessingUnit: Calculate Distance (dist(G(t), G_prev))
        ProcessingUnit->>ProcessingUnit: Calculate Variance (var(M(t)))
        ProcessingUnit->>ProcessingUnit: Compute F(t)
        Processing Unit->>DataStorage: Store F(t)
        ProcessingUnit->>ProcessingUnit: Calculate R(t) over Δt
        ProcessingUnit->>ProcessingUnit: Evaluate R(t) against threshold θ
        ProcessingUnit->>User: Return Proximal Record Result ("Valid" or "Invalid")
<code>
```

In some examples, the proximity detection device may be expected to be highly secure. However, in some examples, the target of data immutability may lead to a challenge, as nearly all devices are susceptible to various known, unknown, and emerging threats, including zero-day attacks. To address this, the proximity detection device may be constructed using WORM (Write-Once, Read-Many) technology. With application of WORM memory, written data stored in the WORM memory in the proximity detection device may be much more difficult to be altered or erased.

In some examples, the proximity detection device may be intended to store the proximity information, such as proximity records, for a predetermined period, e.g., 5 years. Each of these proximity records may be written in such a way that a hash of the record is generated. This hashing process may be aimed at preventing predictive forward attacks, such as those involving precomputed rainbow tables, thereby enhancing the security and integrity of the stored records. Therefore, in some examples, the proximity information is stored in the WORM memory of the proximity detection device as hashed data.

In some examples, an authorized third party, such as a server of a website, may be able to validate continuity of the user being in proximity of the proximity detection device. In some examples, an authorized third party may be an authorization device 120.

In some examples, the authorized third party may collect sensor data, such as biometric, motion, GPS, from one or more proximity detection devices and perform validation on whether the one or more proximity detection devices are still in proximity to the user over time.

In some examples, the validation on proximity may be one of a plurality of factors in the overall authentication process when the user makes a request to access a service.

In some examples, the user 160 may request to access a service, e.g. through a processing device 140 like a smartphone or laptop. In response to the request, the authentication device 120 may verify the proximity information provided by one or more proximity detection devices 150 through the processing device 140.

In some examples, the authentication device 120 may check other factors, such as credentials, biometrics, or traditional methods, e.g., passwords or OAuth2 tokens. However, the validated continuous proximity of the user to the proximity detection device may provide an additional layer of security.

In some examples, to maintain continuous awareness of the user's proximity to the proximity detection device 150, there may be circumstances where proximity is temporarily interrupted. Such cases may include situations like medical procedures, such as an MRI, a temporary skin condition, or damage to the proximity detection device. These interruptions may cause the proximity detection device to become decoupled from the user.

In a possible event that the proximity detection device is decoupled from the user for a period of time exceeding a predefined threshold, such as more than 1 second, though this can be adjusted, it may automatically generate a decoupling record. When the user reestablishes proximity to the device, a corresponding recoupling record may be logged. These records may be available for query when the user next attempts to authenticate.

In some examples, the authentication server, such as a server of a website, that is aware of the break in proximity may take additional steps, such as requiring extra authentication methods to verify the user's identity. Additionally, the authentication service may query the proximity detection device for a comprehensive continuity report, confirming whether the user has remained in proximity to the device during a broader time period. This data may serve as an additional factor in the authentication process.

In some examples, the proximity detection device may also log successful authentication attempts. The process may follow these operations:

The user may request authentication to an authentication device of a website.
The authentication device may contact the proximity detection device to retrieve the user's ID.
The authentication device may correlate the login ID with the device ID of the proximity detection device.
The authentication device may query the proximity information provided by the proximity detection device.
If the continuity of the user is validated based on the proximity information, the authentication device may generate an authentication token.
The device may record the success or failure of the authentication attempt as authentication history.

In some examples, authentication on further access attempts may reference the authentication history for validation. The proof of authentication may include relevant site attributes, such as the number of validations and/or site category, in a way that respects user privacy.

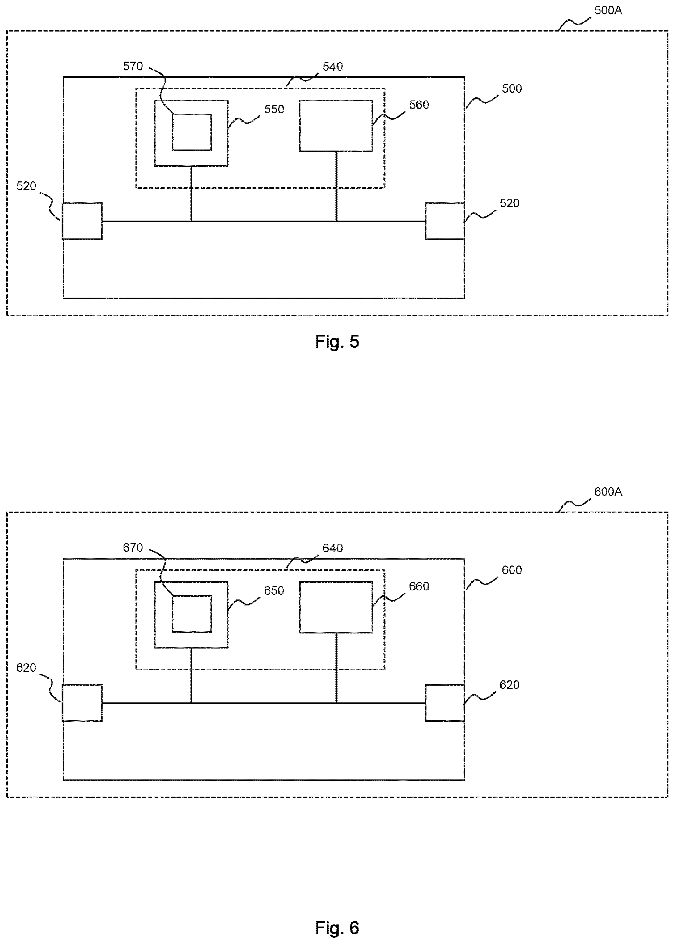

Fig. 5 shows a block diagram of an example of apparatus 500. In some examples, apparatus 500 may be proximity detection device 150 in Fig. 1.

In some examples, apparatus 500 may include interfaces 520, such as 520a and 520b, and processing circuitry 540. Apparatus 500 may be configured to implement, based on the cooperations between one or more tangible computer-readable ("machine-readable") non-transitory storage medium 550 and one or more processors 560 of the processing circuitry 540, operations and/or functionalities described with reference to the Figs. 1, 2, 3, and/or, and/or one or more operations described herein, which are associated with proximity detection device 150. In some examples, medium may refer to memory or media.

In some examples, apparatus 500 may perform the above implementations when the computer-executable instructions, such as the logic or computer program 570, are executed by one or more processors 560. In some examples, the interfaces 520 are interface means 520 and the processing circuitry 540 is processing means 540. In some examples, apparatus 500 may be in a computer system 500A which may include other apparatuses.

In some examples, the interfaces 520 may be configured to communicate with other entities. For example, the entities may be entities in system 100. In some examples, interfaces 520 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other medium.

In some examples, one or more processors 560 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage medium" may be directed to include all machine and/or computer readable medium, with the sole exception being a transitory propagating signal.

In some examples, the storage medium 550 may include one or more types of computer-readable storage medium capable of storing data, including volatile memory, non-volatile memory, removable or non-removable memory, erasable or non-erasable memory, writeable or re-writeable memory, and the like. For example, storage medium 550 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 570 may include instructions, data, and/or code, which, if executed by a machine, such as implemented by one or more processors in an apparatus, may cause the machine to perform a method, process, and/or operations as described herein, such as the examples, operations and/or functionalities comprises the examples, operations and/or functions of the proximity detection device 150 associated with Figs. 1, 2, 3, and/or 4. The machine may include, for example, any suitable processing platform, computing platform, computing device, processing device, computing system, processing system, computer, processor, or the like, and may be implemented using any suitable combination of hardware, software, firmware, and the like.

In some examples, each of components 520, 540, 550, 560 and 570 in the apparatus 500 may be implemented by a corresponding means capable of implementing the functions of the above components. In some examples, storage media 550 is not included in apparatus 500 because processors 560 may read logic or computer program 570 from a storage media out of the apparatus 500.

In some examples, the logic or computer program 570 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces 520, storage media 550 and processors 560 communicate with each other via bus. In some other examples, some of these entities have direct communicative connections with each other.

Fig. 6 shows a block diagram of an example of apparatus 600. In some examples, apparatus 600 may be authentication device 120 in Fig. 1.

In some examples, apparatus 600 may include interfaces 620, such as 620a and 620b, and processing circuitry 640. Apparatus 600 may be configured to implement, based on the cooperations between one or more tangible computer-readable ("machine-readable") non-transitory storage media 650 and one or more processors 660 of the processing circuitry 640, operations and/or functionalities described with reference to the Figs. 1, 2, 3, and/or 4, and/or one or more operations described herein, which are associated with authentication device 120.

In some examples, apparatus 600 may perform the above implementations when the computer-executable instructions, such as the logic or computer program 670, are executed by one or more processors 660. In some examples, the interfaces 620 are interface means 620 and the processing circuitry 640 is processing means 640. In some examples, apparatus 600 may be in a computer system 600A which may include other apparatuses.

In some examples, interfaces 620 may be configured to communicate with other entities. For example, the entities may be entities in system 100. In some examples, interfaces 620 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other media.

In some examples, one or more processors 660 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage media" may be directed to include all machine and/or computer readable media, with the sole exception being a transitory propagating signal.

In some examples, the storage media 650 may include one or more types of computer-readable storage media capable of storing data, including volatile memory, non-volatile memory, removable or non-removable memory, erasable or non-erasable memory, writeable or re-writeable memory, and the like. For example, storage media 650 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 670 may include instructions, data, and/or code, which, if executed by a machine, such as implemented by one or more processors in an apparatus, may cause the machine to perform a method, process, and/or operations as described herein, such as the examples, operations and/or functionalities comprises the examples, operations and/or functions of the authentication device 120 associated with Figs. 1, 2, 3, and/or 4. The machine may include, for example, any suitable processing platform, computing platform, computing device, processing device, computing system, processing system, computer, processor, or the like, and may be implemented using any suitable combination of hardware, software, firmware, and the like.

In some examples, each of components 620, 640, 650, 660 and 670 in the apparatus 600 may be implemented by a corresponding means capable of implementing the functions of the above components. In some examples, storage media 650 is not included in apparatus 600 because processors 660 may read logic or computer program 670 from a storage media out of the apparatus 600.

In some examples, the logic or computer program 670 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces 620, storage media 650 and processors 660 communicate with each other via bus. In some other examples, some of these entities have direct communicative connections with each other.

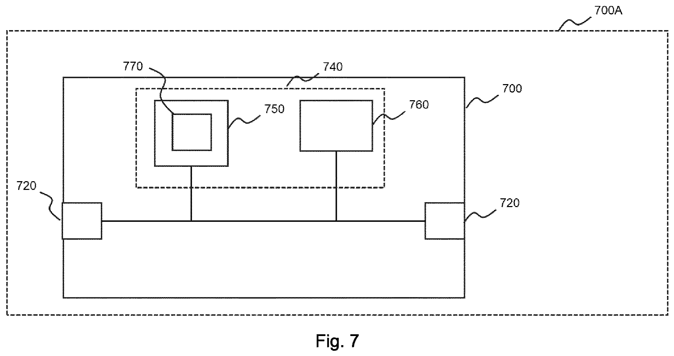

Fig. 7 shows a block diagram of an example of apparatus 700. In some examples, apparatus 700 may be processing device 140 in Fig. 1.

In some examples, apparatus 700 may include interfaces 720, such as 720a and 720b, and processing circuitry 740. Apparatus 700 may be configured to implement, based on the cooperations between one or more tangible computer-readable ("machine-readable") non-transitory storage media 750 and one or more processors 760 of the processing circuitry 740, operations and/or functionalities described with reference to the Figs. 1, 2, 3, and/or 4, and/or one or more operations described herein, which are associated with processing device 140.

In some examples, apparatus 700 may perform the above implementations when the computer-executable instructions, such as the logic or computer program 770, are executed by one or more processors 760. In some examples, the interfaces 720 are interface means 720 and the processing circuitry 740 is processing means 740. In some examples, apparatus 600 may be in a computer system 700A which may include other apparatuses.

In some examples, interfaces 720 may be configured to communicate with other entities. For example, the entities may be entities in system 100. In some examples, interfaces 720 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other media.

In some examples, one or more processors 760 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage media" may be directed to include all machine and/or computer readable media, with the sole exception being a transitory propagating signal.

In some examples, the storage media 750 may include one or more types of computer-readable storage media capable of storing data, including volatile memory, non-volatile memory, removable or non-removable memory, erasable or non-erasable memory, writeable or re-writeable memory, and the like. For example, storage media 750 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 770 may include instructions, data, and/or code, which, if executed by a machine, such as implemented by one or more processors in an apparatus, may cause the machine to perform a method, process, and/or operations as described herein, such as the examples, operations and/or functionalities comprises the examples, operations and/or functions of the processing device 120 associated with Figs. 1, 2, 3, and/or 4. The machine may include, for example, any suitable processing platform, computing platform, computing device, processing device, computing system, processing system, computer, processor, or the like, and may be implemented using any suitable combination of hardware, software, firmware, and the like.

In some examples, each of components 720, 740, 750, 760 and 770 in the apparatus 700 may be implemented by a corresponding means capable of implementing the functions of the above components. In some examples, storage media 750 is not included in apparatus 700 because processors 760 may read logic or computer program 770 from a storage media out of the apparatus 700.

In some examples, the logic or computer program 770 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces 720, storage media 750 and processors 760 communicate with each other via bus. In some other examples, some of these entities have direct communicative connections with each other.

In the following, some examples of a proposed concept are presented.

An example (e.g., example 1) relates to a computer-readable medium including computer-readable instructions, when executed, to implement a method. The method may comprise obtaining a first group of distance-related information associated with a first proximity detection device and a user over a period of time. The method may further comprise determining, based on the first group of distance-related information, first proximity information indicating whether the first proximity detection device is proximate to the user over the period of time. Furthermore, the method may comprise providing the first proximity information for authentication on the user.

An example (e.g., example 2). relates to a previously described example (e.g., example 1) or to any of the examples described herein, wherein the determining, based on the first group of distance-related information, first proximity information comprises:

> determining, based on the first group of distance-related information and a function, a first proximal record; and
> determining, based on the first proximal record and a first threshold value, the first proximity information.

An example (e.g., example 3). relates to a previously described example (e.g., example 2) or to any of the examples described herein, wherein the function is applied with a plurality of weights to different input values.

An example (e.g., example 4). relates to a previously described example (e.g., any one of examples 1 to 3) or to any of the examples described herein, wherein the first proximity information is determined for a first service requested by the user; and wherein the method further comprises: providing a first identifier for the first service requested for the authentication, wherein the first identifier corresponds to the first proximity information, and wherein the first identifier comprises user information identifying the user and first service information identifying the first service.

An example (e.g., example 5). relates to a previously described example (e.g., example 4) or to any of the examples described herein, the method may further comprise generating the first identifier for the first service.

An example (e.g., example 6). relates to a previously described example (e.g., any one of examples 4 to 5) or to any of the examples described herein, the method may further comprise determining second proximity information for a second service requested by the user. The method may further comprise generating a second identifier for the second service. The second identifier may comprise the user information and second service information identifying the second service. Furthermore, the method may further comprise providing the second proximity information and the second identifier for authentication.

An example (e.g., example 7). relates to any previously described example to any of the examples described herein, wherein the first proximity information may be without privacy information of the user.

An example (e.g., example 8). relates to a previously described example (e.g., example 7) or to any of the examples described herein, wherein the privacy information of the user may comprise location data of the user, biometrics data of the user, video data of the user and/or voice data of the user.

An example (e.g., example 9). relates to any previously described example (e.g., any one of examples 1 to 8) or to any of the examples described herein, wherein the method may further comprise determining information associated with decoupling of the user from the first proximity detection device over the period of time.

An example (e.g., example 10). relates to a previously described example (e.g., example 9) or to any of the examples described herein, wherein the first proximity information may be determined further based on the information associated with decoupling of the user from the first proximity detection device.

An example (e.g., example 11). relates to a previously described example (e.g., any one of examples 9 to 10) or to any of the examples described herein, the method may further comprise providing the information associated with decoupling of the user to the first authentication device.

An example (e.g., example 12). relates to a previously described example (e.g., any one of examples 9 to 11) or to any of the examples described herein, wherein the information associated with decoupling may comprise: a number of times decoupling occurs, length of time of being decoupled over the period of time, a number of times coupling occurs, and/or length of time of being coupled over the period of time.

An example (e.g., example 13). relates to a previously described example (e.g., any one of examples 1 to 12) or to any of the examples described herein, wherein the method may further comprise providing authentication history associated with the first proximity detection device for the authentication.

An example (e.g., example 14). relates to a previously described example (e.g., example 13) or to any of the examples described herein, the authentication history may be of one or more services requested by the user.

An example (e.g., example 15). relates to a previously described example (e.g., any one of examples 13 to 14) or to any of the examples described herein, wherein the providing authentication history may comprise providing the authentication history of a service requested by the user for authentication on a different service requested by the user.

An example (e.g., example 16). relates to a previously described example (e.g., any one of examples 13 to 15) or to any of the examples described herein, wherein the authentication history may comprise: a number of rejected authentication requests, a number of successful authentication requests, and/or a rejection rate of authentication requests.

An example (e.g., example 17). relates to a previously described example (e.g., any one of examples 1 to 6) or to any of the examples described herein, the method may further comprise storing at least one of the first group of distance-related information or the first proximity information in a Write-Once Read-Many (WORM) memory for a predetermined period of time.

An example (e.g., example 18). relates to a previously described example (e.g., example 17) or to any of the examples described herein, wherein storing the first plurality of groups of distance-related information may comprise performing hash to the at least one of the first group of distance-related information or the first proximity information. It may further comprise storing a result of the hash.

An example (e.g., example 19). relates to a previously described example (e.g., any one of examples 17 to 18) or to any of the examples described herein, the method may further comprise starting, responsive to a situation where a predetermined portion of the WORM memory is used up for storage, a process of indicating replacement of the WORM memory.

An example (e.g., example 20). relates to a previously described example (e.g., example 19) or to any of the examples described herein, wherein the process of replacing the WORM memory may comprise indicating that the WORM memory is to be replaced by a new WORM memory. Alternatively, the process of replacing the WORM memory may comprise indicating that the first proximity detection device is to be replaced by another proximity detection device.

An example (e.g., example 21). relates to a previously described example (e.g., any one of examples 1 to 20) or to any of the examples described herein, wherein a group of the first of group of distance-related information may comprise at least one of: sound level information of the user detected by the first proximity detection device, biometric information of the user, information on geographical coordinates of the first proximity detection device, temperature information detected by the first proximity detection device, air pressure information detected by the first proximity detection device, or motion information detected by first proximity detection device.

An example (e.g., example 22) relates to a computer-readable medium including computer-readable instructions, when executed, to implement a method. The method may comprise receiving first proximity information indicating whether a user is proximate to a first proximity detection device over a period of time. The method may further comprise performing, based on the first proximity information over the period of time, authentication on the user.

An example (e.g., example 23) relates to a previously described example (e.g., examples 1 to 22) or to any of the examples described herein, the method may further comprise receive information associated with decoupling of the user from the first proximity detection devices over the period of time. **In** the method, performing the authentication on the user may comprise performing, based on the first proximity information and the information associated with decoupling, the authentication on the user.

An example (e.g., example 24) relates to a previously described example (e.g., example 23) or to any of the examples described herein, wherein the information associated with decoupling comprises: a number of times decoupling occurs, length of time of being decoupled over the period of time, a number of times coupling occurs, and/or length of time of being coupled over the period of time.

An example (e.g., example 25) relates to a previously described example (e.g., any one of examples 22 to 24) or to any of the examples described herein, wherein the method may further comprise receiving authentication history associated with the first proximity detection device, wherein performing authentication on the user may be further based on authentication history.

An example (e.g., example 26) relates to a previously described example (e.g., example 25) or to any of the examples described herein, the authentication history may be of one or more services requested by the user.

An example (e.g., example 27) relates to a previously described example (e.g., any one of examples 25 to 26) or to any of the examples described herein, wherein receiving authentication history associated with the first proximity detection device may comprise receiving the authentication history of a first service requested by the user. It may further comprise performing, based on the authentication history of the first service, user authentication on a second service requested by the user.

An example (e.g., example 28) relates to a previously described example (e.g., any one of examples 25 to 27) or to any of the examples described herein, wherein the authentication history may comprise at least one of: a number of rejected authentication requests, a number of successful authentication requests, or a rejection rate of authentication requests.

An example (e.g., example 29) relates to a method for user authentication. The method comprises obtaining a first group of distance-related information associated with a first proximity detection device and a user over a period of time. The method may further comprise determining, based on the first group of distance-related information, first proximity information indicating whether the first proximity detection device is proximate to the user over the period of time. In some examples, the method may further comprise providing the first proximity information for authentication on the user.

An example (e.g., example 30) relates to a previously described example (e.g., example 29) or to any of the examples described herein, wherein the determining, based on the first group of distance-related information, first proximity information comprises: determining, based on the first group of distance-related information and a function, a first proximal record; and determining, based on the first proximal record and a first threshold value, the first proximity information.

An example (e.g., example 31) relates to a previously described example (e.g., example 30) or to any of the examples described herein, wherein the function is applied with a plurality of weights to different input values.

An example (e.g., example 32) relates to a previously described example (e.g., any one of examples 29 to 31) or to any of the examples described herein, wherein the first proximity information is determined for a first service requested by the user; and wherein the method further comprises: providing a first identifier for the first service requested for the authentication, wherein the first identifier corresponds to the first proximity information, and wherein the first identifier comprises user information identifying the user and first service information identifying the first service.

An example (e.g., example 33) relates to a previously described example (e.g., example 32) or to any of the examples described herein, the method further comprises generating the first identifier for the first service.

An example (e.g., example 34) relates to a previously described example (e.g., examples 32 or 33) or to any of the examples described herein, the method further comprises: determining second proximity information for a second service requested by the user; generating a second identifier for the second service, wherein the second identifier comprises the user information and second service information identifying the second service; and providing the second proximity information and the second identifier for authentication.

An example (e.g., example 35) relates to a previously described example (e.g., any one of examples 29 to 34) or to any of the examples described herein, wherein the first proximity information is without privacy information of the user.

An example (e.g., example 36) relates to a previously described example (e.g., example 35) or to any of the examples described herein, wherein the privacy information of the user comprises location data of the user, biometrics data of the user, video data of the user and/or voice data of the user.

An example (e.g., example 37) relates to a previously described example (e.g., any one of examples 29 to 36) or to any of the examples described herein, wherein the method further comprises determining information associated with decoupling of the user from the first proximity detection device over the period of time.

An example (e.g., example 38) relates to a previously described example (e.g., example 37) or to any of the examples described herein, wherein the first proximity information is determined further based on the information associated with decoupling of the user from the first proximity detection device.

An example (e.g., example 39) relates to a previously described example (e.g., examples 37 or 38) or to any of the examples described herein, the method further comprises providing the information associated with decoupling of the user to the first authentication device.

An example (e.g., example 40) relates to a previously described example (e.g., any one of examples 37 to 39 ) or to any of the examples described herein, wherein the information associated with decoupling comprises: a number of times decoupling occurs, length of time of being decoupled over the period of time, a number of times coupling occurs, and/or length of time of being coupled over the period of time.

An example (e.g., example 41) relates to a previously described example (e.g., any one of examples 29 to 40) or to any of the examples described herein, wherein the method further comprises providing authentication history associated with the first proximity detection device for the authentication

An example (e.g., example 42) relates to a previously described example (e.g., example 41) or to any of the examples described herein, wherein the authentication history is of one or more services requested by the user.

An example (e.g., example 43) relates to a previously described example (e.g., examples 41 or 42) or to any of the examples described herein, wherein the providing authentication history comprises providing the authentication history of a service requested by the user for authentication on a different service requested by the user.

An example (e.g., example 44) relates to a previously described example (e.g., any one of examples 41 to 43) or to any of the examples described herein, wherein the authentication history comprises: a number of rejected authentication requests, a number of successful authentication requests, and/or a rejection rate of authentication requests.

An example (e.g., example 45) relates to a previously described example (e.g., any one of examples 29 to 44) or to any of the examples described herein, the method further comprises storing at least one of the first group of distance-related information or the first proximity information in a Write-Once Read-Many (WORM) memory for a predetermined period of time.

An example (e.g., example 46) relates to a previously described example (e.g., example 45) or to any of the examples described herein, wherein storing the first plurality of groups of distance-related information comprises performing hash to the at least one of the first group of distance-related information or the first proximity information, and storing a result of the hash.

An example (e.g., example 47) relates to a previously described example (e.g., examples 45 or 46 ) or to any of the examples described herein, the method further comprises starting, responsive to a situation where a pre-determined portion of the WORM memory is used up for storage, a process of indicating replacement of the WORM memory.

An example (e.g., example 48) relates to a previously described example (e.g., example 47) or to any of the examples described herein, wherein the process of replacing the WORM memory comprises indicating that the WORM memory is to be replaced by a new WORM memory. Alternatively, it comprises indicating that the first proximity detection device is to be replaced by another proximity detection device.

An example (e.g., example 49) relates to a previously described example (e.g., any one of examples 29 to 48) or to any of the examples described herein, wherein a group of the first of group of distance-related information comprises at least one of: sound level information of the user detected by the first proximity detection device, biometric information of the user, information on geographical coordinates of the first proximity detection device, temperature information detected by the first proximity detection device, air pressure information detected by the first proximity detection device, or motion information detected by first proximity detection device.

An example (e.g. example 50) a method for user authentication. The method comprises receiving first proximity information indicating whether a user is proximate to a first proximity detection device over a period of time. The method may further comprise performing, based on the first proximity information over the period of time, authentication on the user.

An example (e.g., example 51) relates to a previously described example (e.g., example 50) or to any of the examples described herein, the method further comprises: receiving information associated with decoupling of the user from the first proximity detection devices over the period of time. In the method the performing the authentication on the user may comprise performing, based on the first proximity information and the information associated with decoupling, the authentication on the user.

An example (e.g., example 52) relates to a previously described example (e.g., example 51) or to any of the examples described herein, wherein the information associated with decoupling comprises: a number of times decoupling occurs, length of time of being decoupled over the period of time, a number of times coupling occurs, and/or length of time of being coupled over the period of time.

An example (e.g., example 53) relates to a previously described example (e.g., any one of examples 50 to 52) or to any of the examples described herein, wherein the method further comprises receiving authentication history associated with the first proximity detection device, wherein performing authentication on the user is further based on authentication history.

An example (e.g., example 54) relates to a previously described example (e.g., example 53) or to any of the examples described herein, wherein the authentication history is of one or more services requested by the user.

An example (e.g., example 55) relates to a previously described example (e.g., any one of examples 53 to 54) or to any of the examples described herein, wherein receiving authentication history associated with the first proximity detection device comprises receiving the authentication history of a first service requested by the user. **In** the example, the receiving may further comprise performing, based on the authentication history of the first service, user authentication on a second service requested by the user.

An example (e.g., example 56) relates to a previously described example (e.g., any one of examples 53 to 55) or to any of the examples described herein, wherein the authentication history comprises at least one of: a number of rejected authentication requests, a number of successful authentication requests, or a rejection rate of authentication requests.

An example (e.g. example 57) relates to an apparatus 500 comprising an interface 520 and a processing circuitry 540. Apparatus 500 comprises machine-readable instructions 570. The processing circuitry 540 is configured with a trusted execution environment to execute the machine-readable instructions 570 inside the trusted execution environment to obtain a first group of distance-related information associated with a first proximity detection device and a user over a period of time. The processing circuitry may be further configured to determine, based on the first group of distance-related information, first proximity information indicating whether the first proximity detection device is proximate to the user over the period of time. Moreover, the processing circuitry may be configured to provide the first proximity information for authentication on the user.

An example (e.g. example 58) relates to an apparatus 500 comprising an interface 520 and a processing circuitry 540. Apparatus 500 comprises machine-readable instructions 570. The processing circuitry 540 is configured with a trusted execution environment to execute the machine-readable instructions 570 inside the trusted execution environment to implement the method of any one of examples 29 to 49.

An example (e.g. example 59) relates to an apparatus 500 comprising an interface 520 and a processing circuitry 540. Apparatus 500 comprises machine-readable instructions 570. The processing circuitry 540 is configured with a trusted execution environment to execute the machine-readable instructions 570 inside the trusted execution environment, wherein the machine-readable instructions 570 may computer-readable instructions stored in computer-readable medium of any one of examples 1 to 21.

An example (e.g. example 60) relates to an apparatus 600 comprising an interface 620 and a processing circuitry 640. Apparatus 600 comprises machine-readable instructions 670. The processing circuitry 640 is configured with a trusted execution environment to execute the machine-readable instructions 670 inside the trusted execution environment to receive first proximity information indicating whether a user is proximate to a first proximity detection device over a period of time, and perform, based on the first proximity information over the period of time, authentication on the user.

An example (e.g. example 61) relates to an apparatus 600 comprising an interface 620 and a processing circuitry 640. Apparatus 600 comprises machine-readable instructions 670. The processing circuitry 640 is configured with a trusted execution environment to execute the machine-readable instructions 670 inside the trusted execution environment to implement the method of any one of examples 50 to 56.

An example (e.g. example 62) relates to an apparatus 600 comprising an interface 620 and a processing circuitry 640. Apparatus 600 comprises machine-readable instructions 670. The processing circuitry 640 is configured with a trusted execution environment to execute the machine-readable instructions 670 inside the trusted execution environment, wherein the machine-readable instructions 670 may computer-readable instructions stored in computer-readable medium of any one of examples 22 to 28.

An example (e.g., example 63) relates to a system comprising the apparatus 500 according to any one of examples 57 to 59, or according to any other example.

An example (e.g., example 64) relates to a system comprising the apparatus 600 according to any one of examples 60 to 62, or according to any other example.

An example (e.g., example 65) relates to a system comprising the apparatus 500 according to any one of examples 57 to 59, or according to any other example and the apparatus 600 according to any one of examples 60 to 62, or according to any other example.

An example (e.g., example 66) relates to a computer program having a program code for performing the method of one of the examples 29 to 49 (or according to any other example) when the computer program is executed on a computer, a processor, or a programmable hardware component.

An example (e.g., example 67) relates to a computer program having a program code for performing the method of one of the examples 50 to 56 (or according to any other example) when the computer program is executed on a computer, a processor, or a programmable hardware component.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several substeps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A computer-readable medium including computer-readable instructions, when executed, to implement a method, comprising:

   obtaining a first group of distance-related information associated with a first proximity detection device and a user over a period of time;
   determining, based on the first group of distance-related information, first proximity information indicating whether the first proximity detection device is proximate to the user over the period of time; and
   providing the first proximity information for authentication on the user.

2. The computer-readable medium of claim 1, wherein the determining, based on the first group of distance-related information, first proximity information comprises:

   determining, based on the first group of distance-related information and a function, a first proximal record; and
   determining, based on the first proximal record and a first threshold value, the first proximity information.

3. The computer-readable medium of claim 2, wherein the function is applied with a plurality of weights to different input values.

4. The computer-readable medium of any one of claims 1 to 3,

   wherein the first proximity information is determined for a first service requested by the user; and
   wherein the method further comprises:
   providing a first identifier for the first service requested for the authentication, wherein the first identifier corresponds to the first proximity information, and wherein the first identifier comprises user information identifying the user and first service information identifying the first service.

5. The computer-readable medium of claim 4, further comprising:
   generating the first identifier for the first service.

6. The computer-readable medium of claim 4 or 5, further comprising:

   determining second proximity information for a second service requested by the user;
   generating a second identifier for the second service, wherein the second identifier comprises the user information and second service information identifying the second service; and
   providing the second proximity information and the second identifier for authentication.

7. The computer-readable medium of any one of claims 1 to 6, wherein the first proximity information is without privacy information of the user.

8. The computer-readable medium of claim 7, wherein the privacy information of the user comprises location data of the user, biometrics data of the user, video data of the user and/or voice data of the user.

9. The computer-readable medium of any one of claims 1 to 8, wherein the method further comprises: determining information associated with decoupling of the user from the first proximity detection device over the period of time.

10. The computer-readable medium of claim 9, wherein the first proximity information is determined further based on the information associated with decoupling of the user from the first proximity detection device.

11. The computer-readable medium of claim 9 or 10, the method further comprising: providing the information associated with decoupling of the user to the first authentication device.

12. A computer-readable medium including computer-readable instructions, when executed, to implement a method, comprising:

   receiving first proximity information indicating whether a user is proximate to a first proximity detection device over a period of time; and
   performing, based on the first proximity information over the period of time, authentication on the user.

13. The computer-readable medium of claim 12, wherein the method further comprises:

   receiving authentication history associated with the first proximity detection device, wherein
   performing authentication on the user is further based on authentication history.

14. The computer-readable medium of claim 12 or 13, the method further comprising:

   receiving information associated with decoupling of the user from the first proximity detection devices over the period of time; and
   wherein performing the authentication on the user comprises: performing, based on the first proximity information and the information associated with decoupling, the authentication on the user.

15. The computer-readable medium of claim 14, wherein the information associated with decoupling comprises: a number of times decoupling occurs, length of time of being decoupled over the period of time, a number of times coupling occurs, and/or length of time of being coupled over the period of time.

Fig. 1

| |
|---|
| Obtaining a first plurality of groups of distance-related information associated with a first proximity detection device and a user over a period of time; |

| |
|---|
| Determining, based on the first plurality of groups of distance-related information, first proximity information indicating whether the first proximity detection device is proximate to the user over the period of time; |

| |
|---|
| Providing the first proximity information for authentication on the user. |

Fig. 2

320

Receiving first proximity information indicating whether a user is proximate to a first proximity detection device over a period of time;

340

Performing, based on the first proximity information over the period of time, authentication on the user.

Fig. 3

| User | Sensor Module | Processing Unit | Data Storage |
|---|---|---|---|

402. Activating sensors

404. Gathering sensor data

406. Sending data

408-2. Normalizing biometrics

408-4. Calculate distance

408-6. Calculate Variance

408-8. Computing a function (t)

410. Storing the function (t)

412. Calculating a statistical result of the function

414. Determining the proximity information based on the statistical result and a threshold value

416. Providing the proximity information to the user

Fig. 4

500A

570  540

500

550  560

520  520

Fig. 5

600A

670  640

600

650  660

620  620

Fig. 6

Fig. 7

Europäisches
Patentamt

European
Patent Office

Office européen
des brevets

## EUROPEAN SEARCH REPORT

**Application Number**

EP 25 20 3669

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/070134 A1 (NAGISETTY RAMUNE [US] ET AL) 12 March 2015 (2015-03-12) * paragraph [0013] - paragraph [0038] * ----- | 1-15 | INV. H04W12/63 H04W12/06 H04W4/02 H04W12/33 |
| X | US 2021/243186 A1 (TORMASOV ALEXANDER [RU] ET AL) 5 August 2021 (2021-08-05) * paragraph [0018] - paragraph [0042]; figures 2,3 * ----- | 1-15 | |
| X | US 2017/289118 A1 (KHOSRAVI HORMUZD M [US] ET AL) 5 October 2017 (2017-10-05) * paragraph [0011] - paragraph [0057]; figures 1,4 * ----- | 1-15 | |
| A | US 2019/156345 A1 (CHEN XUEMIN [US] ET AL) 23 May 2019 (2019-05-23) * the whole document * ----- | 1-15 | |
| A | CN 105 229 596 A (NOK NOK LABS INC) 6 January 2016 (2016-01-06) * the whole document * ----- | 1-15 | **TECHNICAL FIELDS SEARCHED (IPC)** H04W |

The present search report has been drawn up for all claims

| Place of search | Date of completion of the search | Examiner |
|---|---|---|
| Munich | 1 December 2025 | Dang, Hoai |

EPO FORM 1503 03.82 (P04C01)

## ANNEX TO THE EUROPEAN SEARCH REPORT
## ON EUROPEAN PATENT APPLICATION NO.

EP 25 20 3669

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | Publication date | Patent family member(s) | | Publication date |
|---|---|---|---|---|
| US 2015070134 A1 | 12-03-2015 | NONE | | |
| US 2021243186 A1 | 05-08-2021 | NONE | | |
| US 2017289118 A1 | 05-10-2017 | US | 2017289118 A1 | 05-10-2017 |
| | | US | 2020099693 A1 | 26-03-2020 |
| | | WO | 2017172141 A1 | 05-10-2017 |
| US 2019156345 A1 | 23-05-2019 | US | 2015310444 A1 | 29-10-2015 |
| | | US | 2019156345 A1 | 23-05-2019 |
| CN 105229596 A | 06-01-2016 | CN | 105229596 A | 06-01-2016 |
| | | CN | 111460406 A | 28-07-2020 |
| | | EP | 2976706 A2 | 27-01-2016 |
| | | EP | 3989623 A1 | 27-04-2022 |
| | | EP | 4654520 A2 | 26-11-2025 |
| | | HK | 1219326 A1 | 31-03-2017 |
| | | JP | 6433978 B2 | 05-12-2018 |
| | | JP | 7308180 B2 | 13-07-2023 |
| | | JP | 7636476 B2 | 26-02-2025 |
| | | JP | 2016521403 A | 21-07-2016 |
| | | JP | 2019061688 A | 18-04-2019 |
| | | JP | 2021043986 A | 18-03-2021 |
| | | JP | 2023134553 A | 27-09-2023 |
| | | JP | 2025072624 A | 09-05-2025 |
| | | US | 2014289833 A1 | 25-09-2014 |
| | | US | 2019253404 A1 | 15-08-2019 |
| | | WO | 2014153462 A2 | 25-09-2014 |

EPO FORM P0459

For more details about this annex : see Official Journal of the European Patent Office, No. 12/82